# EUROPEAN PATENT APPLICATION

(11) **EP 4 597 931 A1**
(43) Date of publication of application: **06.08.2025**
(21) Application number: 24154845.2
(22) Date of filing: 30.01.2024
(51) Int. Cl.: H04L 9/40, H04W 12/06, H04W 12/72

(54) **AUTHENTICATION METHOD AND SYSTEM**

(71) Applicant: XC Professional Services Limited, London N3 2JX (GB)
(72) Inventor: HAZARI, Gautam, London N3 2JX (GB); KONG, Zhen, London N3 2JX (GB)
(74) Representative: Jaeger, Michael David

(57) **Abstract**

An authentication method for verifying that a user is in possession of a mobile device (12), the method comprising: generating a uniform resource locator, URL, in response to receiving a user identifier provided by a user at a mobile device (12) having a subscriber identity module, SIM; receiving the URL at the mobile device, the URL being configured to communicate with a network (14) associated with the SIM; retrieving, using the URL to access the network (14), a SIM identifier corresponding to the SIM; and verifying that the user is in possession of the mobile device (12) if the user identifier corresponds to the SIM identifier.

## Description

### TECHNICAL FIELD

The present disclosure relates to an authentication method for validating that a user is in possession of a mobile device.

### BACKGROUND

Authentication involves verifying the identity of a user attempting to access a digital service. In known systems, authentication for any digital service is generally established using one or more of the following factors: the knowledge factor, the possession factor, and the inherence factor. Each of these factors is described in more detail below.

The knowledge factor relies on the user knowing something. For example, the user having knowledge of secret or privileged information. Authentication is then based on the user proving that they have said information. Requiring that a user provides a password is an example of knowledge-factor based authentication.

The possession factor relies on the user being in possession of something. For example, the user being in possession of some physical object associated with some claimed identifier. Authentication is then based on the user proving that they possess said object. A one-time password (OTP) delivered through, for example, SMS, email, or via a phone call is an example of possession-factor based authentication. In this example, the user is in possession of a mobile phone or other computing device and the claimed identifier is a mobile phone number or email address claimed by the user. The user proves that they are in possession of the mobile phone or computing device associated with said mobile phone number or email address by providing the OTP.

The inherence factor relies on biometric factors. Examples of such biometric factors include fingerprints, vocal biometrics/recognition/signatures, and facial biometrics. These factors which are inherent to the user are relied on for user authentication in inherence-factor based authentication.

Authentication solutions based on the above factors rely on active authentication mechanisms. That is, the user is expected to actively participate in the authentication process. For example, the user is expected to provide a password, provide an OTP or present their biometric data. This creates two critical problems.

Firstly, known authentication systems suffer from a convenience problem. Authentication creates a barrier, or a digital wall, between the user and the digital service to which they require access. This results in an inconvenience to the user in their digital journey. The inconvenience caused by the need for active participation by the user affects conversion rate. In other words, users might opt to not continue with the process.

Secondly, known authentication systems suffer from a security problem. A human user creates a weak link in the security process. Requiring the user to know and share something such as a password (knowledge-factor based authentication); prove possession of something by way of an OTP (possession-factor based authentication); and/or provide biometric data (inherence-factor based authentication), weakens the security of the authentication process. Being the weakest link, the user is susceptible to revealing secret information such as passwords or OTPs. Furthermore, any active biometric authentication mechanisms, such as facial or voice recognition, are at risk of being compromised by generative artificial intelligence. Users are also at risk of attacks by way of phishing, smishing, or vishing that prompt them to reveal OTPs and, as a result, compromise the security of the authentication process. A further security risk arises from the fact that methods for delivering an OTP to a user (SMS, email, phone call) were not created for secure information exchange. This leaves OTPs vulnerable to being leaked.

There is a need for an authentication system and method that does not require active user participation, thus removing a weak link from the authentication chain.

### SUMMARY OF DISCLOSURE

Aspects of the present invention are defined by the independent claims below to which reference should now be made. Optional features are defined by the dependent claims.

The inventor has appreciated that the possession factor can be established without requiring active participation by the user in the form of returning an OTP, for example. The user provides their mobile phone number as a first identifier. The user's possession of a mobile device comprising a SIM associated with the provided mobile phone number is established utilising the mobile data network's capability to identify a mobile phone number using cryptography in the SIM. In this way, the weak link in the form of the human user is removed from the authentication process. Furthermore, the convenience of the process to the user is improved by removing the requirement for them to return an OTP, for example.

In this way, a method and system for validating that a user is in possession of a mobile device seamlessly is provided as detailed below.

According to one aspect of the present disclosure, there is provided an authentication method for verifying that a user is in possession of a mobile device, the method comprising: generating a uniform resource locator, URL, in response to receiving a user identifier provided by a user at a mobile device having a subscriber identity module, SIM; receiving the URL at the mobile device, the URL being configured to communicate with a network associated with the SIM; retrieving, using the URL to access the network, a SIM identifier corresponding to the SIM; and verifying that the user is in possession of the mobile device if the user identifier corresponds to the SIM identifier.

In one example, the user identifier and SIM identifier are mobile station international subscriber directory numbers.

In one example, the authentication method further comprises retrieving, via the network, the SIM identifier from the SIM using a cryptographic challenge.

In one example, the URL is a dynamic URL.

In one example, the URL is a time-bound URL.

In one example, the URL is a one-time-usage URL.

In one example, the authentication method further comprises displaying, on a user interface of the mobile device, a graphic after the user has provided the user identifier and before it is verified that the user is in possession of the mobile device.

Such a graphic can be used as a placeholder for advertisements.

In one example, retrieving the SIM identifier comprises embedding, via the network, the SIM identifier into the URL.

In one example, retrieving the SIM identifier comprises using one or more known parameters of the URL to pull the SIM identifier from the network.

In one example, the one or more known parameters includes an internet protocol, IP, address associated with the mobile device.

In one example, the authentication method further comprises selecting an alternative authentication method if the SIM identifier is unable to be retrieved.

In one example, selecting the alternative authentication method uses a rules-based selection mechanism.

In one example, selecting the alternative authentication method uses a trained machine learning selection mechanism

In one example, verifying that the user is in possession of the mobile device includes generating a match result indicating whether the user identifier corresponds to the SIM identifier.

In one example, the match result is a Boolean result.

In one example, the match result is generated at an application programming interface, API.

In one example, verifying the user is in possession of the mobile device includes receiving the match result from the API at a server.

In one example, the match result is received at a server endpoint after being returned by the API.

In one example, receiving the match result from the API includes polling, by the server, at an API polling endpoint.

In one example, the authentication method further comprises receiving, with the match result, a signal configured to indicate a cyberattack.

This improves the security of the authentication method, enabling cyberattacks such as man-in-the-middle or phishing attacks to be flagged.

In one example, the signal comprises a representation of a first internet protocol, IP, address as seen by the API for comparison with a representation of a second IP address as seen by the server.

In one example, the signal comprises a first signature corresponding to the mobile device as seen by the API for comparison with a second signature as seen by the server.

In one example, the signal is configured to indicate if latency in the method exceeds a threshold.

In one example, the authentication method further comprises determining the threshold using a rules-based system or a trained machine learning model.

According to another aspect of the present disclosure, there is provided a computer system for verifying that a user is in possession of a mobile device, the system being configured to: generate a uniform resource locator, URL, in response to receiving a user identifier provided by a user at a mobile device having a subscriber identity module, SIM, the URL configured to be received by the mobile device and communicate with a network associated with the SIM; retrieve, using the URL to access the network, a SIM identifier corresponding to the SIM; and verify that the user is in possession of the mobile device if the user identifier corresponds to the SIM identifier.

In one example, the computer system comprises an application programming interface, API, configured to generate a uniform resource locator, URL, in response to receiving a user identifier provided by a user at a mobile device having a subscriber identity module, SIM, the URL configured to be received by the mobile device and communicate with a network associated with the SIM; retrieve, using the URL to access the network, a SIM identifier corresponding to the SIM; and verify that the user is in possession of the mobile device if the user identifier corresponds to the SIM identifier.

In one example, the computer system further comprises a server configured to send the user identifier from the mobile device to the API.

In one example, the server is further configured to send the URL to the mobile device.

In one example, the server is further configured to receive a match result indicating whether the user identifier corresponds to the SIM identifier.

According to another aspect of the present invention, there is provided an authentication system comprising the computer system and a mobile device having a subscriber identity module, SIM.

According to another aspect of the present disclosure, there is provided a computer program for executing the authentication method.

According to another aspect of the present disclosure, there is provided a non-transitory computer-readable medium on which are encoded instructions for carrying out the authentication method.

According to another aspect of the present disclosure, there is provided a computer-readable medium on which are encoded instructions for carrying out the authentication method.

### BRIEF DESCRIPTION OF FIGURES

Aspects of the present disclosure are described by way of example only with reference to following figures in which:
Figure 1 is a schematic diagram of an authentication system according to aspects of the present disclosure;
Figure 2 is a flowchart describing an authentication method according to aspects of the present disclosure; and
Figures 3A to 3C are schematic diagrams of a mobile device user interface according to aspects of the present disclosure.

### DETAILED DESCRIPTION

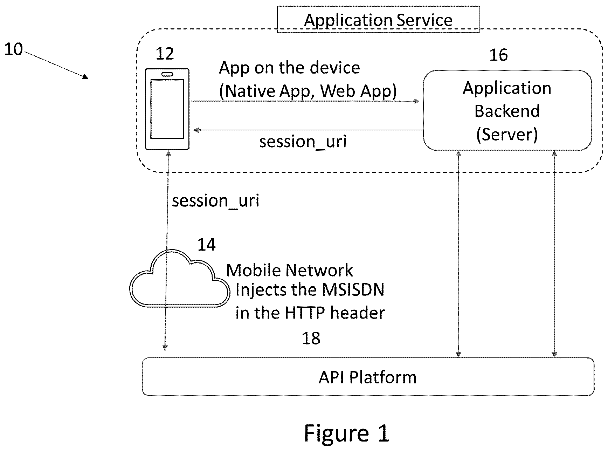

An example authentication system 10 according to aspects of the present disclosure is shown in Figure 1. The system comprises a mobile device 12. In this example, the mobile device 12 is a smartphone. The mobile device 12 has a subscriber identity module (SIM). More specifically, the SIM is a physical SIM card. However, in other examples, the SIM is a digital SIM, or eSIM. In yet further examples, the mobile device comprises a SIM alternative. The alternative is any means configured to store information that identifies the SIM, and therefore the associated mobile device, to a cellular network. The SIM is configured to enable the mobile device 12 to connect to an associated mobile data network 14. The mobile device 12 is further configured to access a web application or native application. The web application or native application is configured to enable the mobile device to connect to an application backend 16, or server, associated with the web or native application. The native or web application and application form part of a wider application service. In this example, the application service is a consumer of an authentication service enabled by the method and system described herein. More specifically, the authentication service is any digital service which requires that a user is authenticated. Examples of such digital services include online banking services/banking applications, ecommerce services, digital wallets, crypto currency wallets, online games, ride sharing apps, online food delivery services, etc. The system further comprises an application programming interface, API, platform 18. The authentication process is delivered through an API which is exposed by the API platform 18. The API platform 18 is the provider of the authentication service enabled by the method and system described herein. The API platform 18 is configured to exchange information with both the application backend 16 and the mobile network 14. The overall system 10 shown in Figure 1 is configured to enable a user of the mobile device 12 to be authenticated when attempting to access a digital service using the mobile device 12. In other words, to enable that a user who claims to be in possession of the mobile device 12 is indeed in possession of the mobile device 12. The system 10 enables verification that the user is indeed using the mobile device 12 they claim they are to access a digital service. The way in which this is done is significant and is described in detail below.

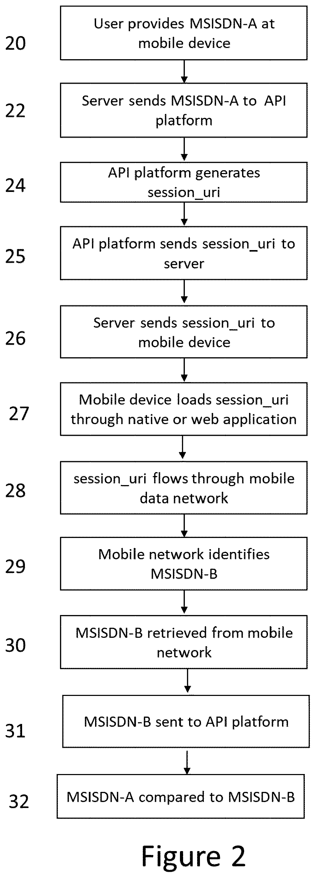

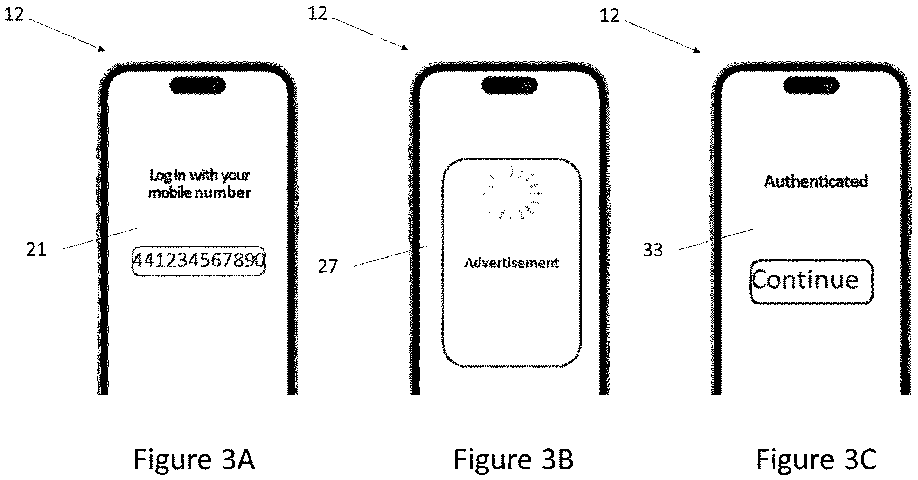

The flowchart of Figure 2 describes an example authentication method executed by the authentication system 10 of Figure 1. At step 20, the user provides a first identifier, or user identifier, at the mobile device 12. In this example, the first identifier is a mobile station international subscriber directory number (MSISDN). The user provided MSISDN is referred to as MSISDN-A herein. In this example, the user is prompted to provide MSISDN-A by the web or native application. More specifically, the user is prompted to provide MSISDN-A on a user interface of the mobile device 12. The user is prompted to provide MSISDN-A by typing it into the user interface. In this example, the user interface is the smartphone display. An example of a user interface 21 prompting the user to provide MSISDN-A is shown in Figure 3A. The user is prompted to provide MSISDN-A in response to the user attempting to access a digital service via the mobile device 12. In other examples, the user has provided MSISDN-A at an earlier stage and MSISDN-A has been stored. More specifically, MSISDN-A is stored at the server 16. MSISDN-A is stored here by the digital service provider. MSISDN-A is then retrieved when the user attempts to access the digital service.

At step 22, MSISDN-A is sent from the server 16 to the API platform 18. More specifically, MSISDN-A is sent from the server 16 to the API platform 18 using the API payload. In this example, MSISDN-A is sent from the server 16 to the API platform 18 after a security handshake of tokens and IP address checks. At step 24, the API platform 18 then generates a uniform resource locator, URL. The URL is generated in response to receiving MSISDN-A. The URL is referred to as the session_uri herein and in Figures 1 and 2. In this example, the session_uri is a dynamic URL. The session_uri is a one-time usage URL. The session_uri is a time-bound URL. Once generated, session_uri is returned to the application backend server 16 at step 25. In this example, the session_uri host points to the API platform 18. An example of a session_uri is 'http://session.apiplatform.com/ab$12345&'.

At step 26 , the session_uri is sent to the mobile device 12. The session_uri is loaded by the native or web application at step 27. The session_uri is configured to communicate with the mobile data network 14. In this example, the session_uri is configured to communicate with the mobile data core network 14. The core network 14 is associated with the mobile device 12 SIM. In other words, the loading of the session_uri by the native or web application enables the session_uri to flow through the core network 14 at step 28. More specifically, the native or web application loads the session_uri from a user agent in the mobile device 12 to send an HTTP GET request using the mobile data network 14. More specifically, the session_uri uses HTTP as the protocol. The web application in the mobile device 12 uses the HTTP protocol to load the URL. The web application uses the GET verb from the HTTP protocol to load the session_uri. In this example, while loading the session_uri, the user interface of the mobile device 12 displays an intermediary page. More specifically, the intermediary page is sent to the mobile device 12 by the API platform 18 when the session_uri is loaded. The session_uri points to the API platform 18. An example of such an intermediary page 27 is shown in Figure 3B. This intermediary page 27 can be used, for example, as a placeholder for displaying advertisements.

At step 29, the core network 14 identifies a second identifier, or SIM identifier, corresponding to the SIM. In this example, the second identifier is a MSISDN associated with the SIM. Said SIM MSISDN is referred to as MSISDN-B herein. In this example, MSISDN-B is identified by the core network 14 by way of a cryptographic challenge to the SIM. More specifically, the cryptographic challenge is a process for the mobile network to authenticate the SIM. The mobile operator generates a random challenge, which is sent to the SIM. The SIM cryptographically signs the random challenge using a unique key stored in the SIM which is then validated by the mobile operator. In this example, the unique key is a cryptographic key called the "Ki". The key is associated with an International Mobile Subscriber Identity (IMSI), which in turn is associated with MSISDN-B.

At steps 30 and 31 of the authentication method, MSISDN-B is retrieved by the API platform 18 from the core network 14. In this example, the core network 14 injects MSISDN-B into the HTTP (hypertext transfer protocol) header of the session_uri. In other words, the core network 14 embeds MSISDN-B, or a representation of MSISDN-B, into the URL. The API platform 18 then extracts MSISDN-B from the URL. More specifically, the API platform extracts MSISDN-B from the HTTP header of session_uri. However, in other examples, the MSISDN-B is retrieved by the API platform 18 by way of a pull method. In other words, the API platform 18 uses one or more known parameters from the session_uri to pull MSISDN-B from the core network 14. More specifically, from the AAA (authentication, authorization, and accounting) server of the mobile core network 14.

In this example, if the API platform 18 is unable to retrieve MSISDN-B, a fallback authentication method is chosen. In this example, possible fallback methods include an SMS OTP, a mobile-originated SMS based authenticator, a FIDO WebAuthN based authenticator, a machine learning based behavioral authenticator, etc. The fallback method is chosen using a rules based mechanism or a trained machine learning mechanism. Reasons for the API platform 18 being unable to retrieve MSISDN-B include the mobile device 12 not being connected to the mobile data network 14.

At step 32, the API platform 18 compares MSISDN-A and MSISDN-B. In other words, the API platform 18 generates a match result. In this example, the match result is a Boolean result. The match result is either that MSISDN-A matches, or corresponds to, MSISDN-B, or the match result is that MSISDN-A does not match, or correspond to, MSISDN-B. In other words, the first possible result is that the identifier provided by the user at the mobile device 12 is indeed the identifier associated with the SIM of that mobile device 12. This means that it can be verified that the user is in possession of the mobile device 12 at the time of attempting to access the digital service in question. The second possible result is that the identifier provided by the user at the mobile device 12 is not the identifier associated with the SIM of that device 12. It can, therefore, not be verified that the user is in possession of the mobile device 12 at the time of attempting to access the digital service. The authentication method, therefore, utilises cryptography in the SIM to establish the possession factor for authentication. More specifically, the cryptography in the SIM is used as a standard by the mobile network to authenticate the SIM in order to retrieve the MSISDN-B.

The result is ultimately returned to the application backend server 16. In this example, the match result is returned to the application backend server 16 by return to a notification endpoint at the backend server 16. In other words, by way of a push method. In other examples, the match result is returned to the application backend server 16 by way of polling the API platform 18 at a polling endpoint. In other words, by way of a pull method. The match result is not returned in response to the session_uri. This is because the session_uri is initiated from the user agent of the mobile device 12 comprising the SIM. The mobile device 12 might not be trusted or secure. Therefore, not returning the result in response to the session_uri avoids security implications. In other words, when the session_uri ends up at the API platform 18, the API platform 18 retrieves the MSISDN-B from the HTTP header of the session_uri, and the API platform 18 has the result of the match of the comparison of MSISDN-A and MSISDN-B. Still, the API platform 18 does not return the result of the match as a response to the session_uri, the reason being the response will go back to the native or web application in the mobile device 12. The mobile device cannot be trusted. For example, there could be harmful applications on the mobile device 12 which can manipulate the result of the match. The server, however, can be trusted as that is owned by the authentication consumer. Hence, the result of the match is returned to the API server 16 using notification or polling.

If it is determined that the user is in possession of the mobile device 12, the user is authenticated. In this example, the user will then be prompted to continue to the digital service they were attempting to access. The user is prompted on the user interface. More specifically, the smartphone display. An example of such a display 33 is shown in Figure 3C.

In this example, in addition to the match result, one or more signals configured to indicate a cyberattack are sent to the backend server 16. More specifically, in this example, cyberattacks include phishing and/or man-in-the middle attacks. In this example, the one or more signals comprises a first internet protocol, IP, address. The first IP address is a remote IP address as seen by the API server 16. Once received, the API server 16 can compare the remote IP address as seen by the API platform 18 as the second IP address, the IP address being in relation to the mobile device 12,. Disparity between the first and second IP addresses indicate a phishing or man-in-the-middle attack. More specifically, if there is a phishing or man-in the-middle attack going on, there will be two mobile devices involved. One mobile device used by the attacker and the other one used by the victim. Hence, there will be two different IP addresses seen. One is seen by the API platform 18 and the other is seen by the backend server 16. The one or more signals further comprises a first mobile device signature. In this example, the mobile device signature is in the form of user agent details. The device signature as seen by the API platform 18 can be compared with a second device signature as seen by the backend server 16. Disparity between the first and second device signatures indicate a phishing or man-in the-middle attack. In this example, the one or more signals comprise a signal configured to indicate if latency in the authentication method exceeds a threshold. In this example, this latency is the overall latency. More specifically, from the first API call between the backend server to the API platform until the session_uri hits the API platform. In other words, a warning flag is sent to the application backend server 16 if the overall latency is higher than a threshold from the profiled latency. The latency profile is determined from the context of the authentication process. In this example, latency is profiled using a rules-based system or using a trained machine learning model. Other authentication systems and methods rely on only one or a combination of the described indicators of a cyberattack. This increases the security of the authentication method.

Embodiments of the present invention have been described with particular reference to the examples illustrated. However, it will be appreciated that variations and modifications may be made to the examples described within the scope of the present invention.

As will be appreciated by one of skill in the art, the invention described herein may be embodied in whole or in part as a method, a data processing system, or a computer program product including computer readable instructions. Accordingly, the invention may take the form of an embodiment combining software, hardware and any other suitable approach or apparatus.

The computer readable program instructions may be stored on a non-transitory, tangible computer readable medium. The computer readable storage medium may include one or more of an electronic storage device, a magnetic storage device, an optical storage device, an electromagnetic storage device, a semiconductor storage device, a portable computer disk, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick.

Exemplary embodiments of the invention may be implemented as a circuit board which may include a CPU, a bus, RAM, flash memory, one or more ports for operation of connected I/O apparatus such as printers, display, keypads, sensors and cameras, ROM, a communications sub-system such as a modem, and communications media.

As will be appreciated by one of skill in the art, the term "processing means" may correspond to any suitable processing device. For example, the processing means may be any of a computer processor, graphics processor, programmable logic device, microprocessor, or any other suitable device. It will be appreciated that the processing means may comprise a plurality of processing devices, and may be a combination of different processing devices such as those described above.

## Claims

1. An authentication method for verifying that a user is in possession of a mobile device, the method comprising:
generating a uniform resource locator, URL, in response to receiving a user identifier provided by a user at a mobile device having a subscriber identity module, SIM;
receiving the URL at the mobile device, the URL being configured to communicate with a network associated with the SIM;
retrieving, using the URL to access the network, a SIM identifier corresponding to the SIM; and
verifying that the user is in possession of the mobile device if the user identifier corresponds to the SIM identifier.

2. The authentication method of claim 1 further comprising retrieving, via the network, the SIM identifier from the SIM using a cryptographic challenge.

3. The authentication method of any preceding claim wherein retrieving the SIM identifier comprises embedding, via the network, the SIM identifier into the URL.

4. The authentication method of claim 1 or claim 2 wherein retrieving the SIM identifier comprises using one or more known parameters of the URL to pull the SIM identifier from the network.

5. The authentication method of any preceding claim wherein verifying that the user is in possession of the mobile device includes generating a match result indicating whether the user identifier corresponds to the SIM identifier.

6. The authentication method of claim 5 wherein the match result is generated at an application programming interface, API.

7. The authentication method of claims 5 to 6 wherein verifying the user is in possession of the mobile device includes receiving the match result from the API at a server.

8. The authentication method of claims 5 to 7 wherein the match result is received at a server endpoint after being returned by the API as notification.

9. The authentication method of claims 5 to 7 wherein receiving the match result from the API includes polling, by the server, at an API polling endpoint.

10. The authentication method of claims 5 to 9 further comprising receiving, with the match result, a signal configured to indicate a cyberattack.

11. The authentication method of claim 10 wherein the signal comprises a representation of a first internet protocol, IP, address as seen by the API for comparison with a representation of a second IP address as seen by the server, both the first and second IP addresses being in relation to the mobile device used.

12. The authentication method of claims 10 to 11 wherein the signal comprises a first signature corresponding to the mobile device as seen by the API for comparison with a second signature as seen by the server.

13. The authentication method of claims 10 to 12 wherein the signal is configured to indicate if latency in the method exceeds a threshold.

14. An computer system for verifying that a user is in possession of a mobile device, the system being configured to:
generate a uniform resource locator, URL, in response to receiving a user identifier provided by a user at a mobile device having a subscriber identity module, SIM, the URL configured to be received by the mobile device and communicate with a network associated with the SIM;
retrieve, using the URL to access the network, a SIM identifier corresponding to the SIM; and
verify that the user is in possession of the mobile device if the user identifier corresponds to the SIM identifier.

15. An authentication system comprising:
the computer system of claim 14; and
a mobile device having a subscriber identity module, SIM.
